Europäisches Patentamt

(19) European Patent Office  (11) Numéro de publication: **0 044 092**

Office européen des brevets  **A1**

(12) **DEMANDE DE BREVET EUROPEEN**

(21) Numéro de dépôt: **81200399.4**  (51) Int. Cl.³: **F 24 B 9/04**

(22) Date de dépôt: **07.04.81**

(30) Priorité: **15.07.80 FR 8015629**

(43) Date de publication de la demande:
**20.01.82 Bulletin 82/3**

(84) Etats contractants désignés:
**AT BE CH DE FR GB IT LI LU NL SE**

(71) Demandeur: **Percebois, Guy Albert**
**5, rue des Vignes**
**Longeville F-57050 Metz(FR)**

(72) Inventeur: **Percebois, Guy Albert**
**5, rue des Vignes**
**Longeville F-57050 Metz(FR)**

(54) Récupérateur de chaleur pour cheminée à feu ouvert.

(57) L'invention se rapporte à un récupérateur de chaleur (6) placé dans une cheminée à feu ouvert (7) et relié à une installation de chauffage central comportant une chaudière (1) et des radiateurs. Les tubes (8) du récupérateur (6) sont équipés d'ailettes internes réalisées par enfoncement à force dans les tubes de deux cornières placées dos à dos. Les deux collecteurs inférieurs du récupérateur comportent une cloison dans leur partie médiane. L'eau est introduite puis évacuée au voisinage de cette partie médiane. Une électrovanne (18) commandée par un thermostat différentiel (19, 20, 21) isole le récupérateur lorsque son eau est moins chaude que celle de la chaudière. Un appareil de sécurité (23, 24, 25) assure, en cas de surchauffe de l'eau du récupérateur, un refroidissement automatique de celui-ci.

FIG. 1

EP 0 044 092 A1

L'invention se rapporte aux récupérateurs de chaleur à circulation d'eau, placés dans une cheminée à feu ouvert en association avec une installation de chauffage central (existante ou à construire) comportant une chaudière et des radiateurs à eau, et constitués par une grille tubulaire qui peut comprendre, d'une manière connue, un faisceau inférieur de tubes horizontaux et un faisceau postérieur de tubes verticaux.

Un tel récupérateur pour cheminée est un échangeur de chaleur. Le rendement optimal d'un échangeur de chaleur peut être obtenu en augmentant au maximum la surface d'échange entre le fluide caloporteur (eau) et le combustible dégageant les calories. ------ A cet effet, les tubes d'un échangeur de chaleur peuvent être pourvus, outre d'ailettes externes, d'ailettes internes, qui doivent avoir une surface de contact maximale avec les tubes afin d'obtenir de bonnes caractéristiques thermiques.

Les échangeurs de chaleur connus comportant des tubes à ailettes internes sont réalisés en matériaux malléables (cuivre, aluminium, etc) afin d'améliorer la qualité du contact et de permettre éventuellement un moletage de la surface extérieure des tubes. Ceux-ci sont donc inadéquats pour résister aux fortes températures et aux chocs, par conséquent pour constituer des récupérateurs pour cheminées. Par ailleurs, ils sont très peu résilients et ne peuvent être assemblés que par brasure ou soudure hétérogène. En outre les ailettes utilisées sont des produits spéciaux, donc de prix de revient élevé (produits obtenus par filage, fonderie ou étirage).

La présente invention a notamment pour but de définir une structure de tubes échangeur de calories pour récupérateurs de cheminées, comportant des ailettes internes fabriquées avec des produits courants du commerce et offrant une grande facilité de montage ainsi qu'un contact tube-ailettes très satisfaisant.

A cet effet, les tubes de la grille d'un récupérateur selon l'invention comportent des ailettes internes sensiblement radiales, constituées par des cornières juxtaposées dos à dos le long de leurs arêtes et introduites par enfoncement. De préférence, ces cornières sont des bandes de tôle pliées à 90° et introduites au nombre de deux dans lesdits tubes où elles forment des ailettes disposées en croix.

On obtient ainsi des tubes échangeurs de chaleur
de haut rendement, car le contact entre les ailettes et
la paroi des tubes est excellent, les cornières possédant
une élasticité propre et tendant à s'ouvrir sous les
efforts conjugués de la force exercée pour les introduire
dans les tubes et de la pression de réaction de ceux-ci.
Les tubes à ailettes internes obtenus offrent une très
grande résistance aux brusques variations de température,
même accentuées, ainsi qu'aux chocs. Ils se distinguent par
un rendement excellent et un prix de revient très bas. De
plus, leur structure particulière permet de réaliser les
tubes et les ailettes en une même matière, savoir en acier,
ce qui permet l'assemblage par soudure autogène et évite la
présence de couples électriques générateurs de corrosion.

Les tubes d'échange de chaleur peuvent en
complément être pourvus d'ailettes externes. En particulier,
lorsque le récupérateur comprend un faisceau inférieur de
tubes horizontaux, ceux-ci comportent de préférence au moins
une ailette externe radiale dirigée vers le haut, qui évite
l'accumulation de cendre (isolant thermique) sur ces tubes
et en améliore de ce fait le rendement.

Dans une forme d'exécution avantageuse, le volume
interne du récupérateur est partagé en deux moitiés par
une cloison séparatrice située dans son plan médian de
symétrie vertical, et l'eau, qui est amenée à passer par l'une
puis par l'autre moitié, est introduite et évacuée en des
endroits voisins dudit plan médian, situés de préférence à
l'avant de la partie inférieure du récupérateur. Cette
disposition permet d'augmenter le débit d'eau traversant
la région centrale de la grille tubulaire du récupérateur,
région qui reçoit le plus de calories du feu brûlant dans la
cheminée. Le rendement thermique du récupérateur s'en
trouve notablement amélioré. D'une manière plus précise,
lorsque le récupérateur comprend un faisceau inférieur
de tubes horizontaux, reliés antérieurement par un tube
transversal horizontal qui est partagé en son milieu
par ladite cloison séparatrice, l'arrivée et la sortie de l'eau peuvent s'effectuer par des tuyaux pénétrant coaxialement à l'intérieur dudit tube transversal, symétriquement en direction de ladite cloison, et débouchant à proximité de cette dernière.

Il convient de brancher un récupérateur selon l'invention en parallèle sur les radiateurs de l'installation et de relier son entrée à la tuyauterie alimentant ceux-ci via une électro-vanne commandée à l'ouverture ou à la fermeture suivant que l'eau contenue dans le récupérateur est plus chaude ou moins chaude que l'eau contenue dans la chaudière. De préférence, l'électro-vanne est commandée par un thermostat différentiel dont les deux sondes sont placées respectivement dans le récupérateur et dans la chaudière. On obtient ainsi une récupération des calories du feu de bois optimale et entièrement automatisée, sans aucune manipulation avant ou après avoir allumé le feu de bois, et sans que le récupérateur se comporte jamais comme un radiateur dont les calories seraient évacuées en pure perte dans la cheminée lorsque le feu tombe.

Pour éviter tout accident dû à une surchauffe de l'eau dans le récupérateur, son entrée est avantageusement reliée à la tuyauterie alimentant les radiateurs via un clapet anti-retour placé en série avec ladite électro-vanne, ainsi qu'à une source d'eau froide via une vanne de sécurité normalement fermée et commandée mécaniquement à l'ouverture par une sonde thermométrique à fonctionnement autonome (c'est-à-dire ne nécessitant pas une source d'énergie auxiliaire) qui mesure la température de l'eau dans le récupérateur. Ainsi, de l'eau froide vient automatiquement refroidir l'eau du récupérateur lorsque celle-ci atteint une température limite déterminée, en raison de la défaillance d'un organe de l'installation, d'une panne d'alimentation électrique, d'une erreur de manipulation ou de la production dans la cheminée d'une quantité de chaleur supérieure à la consommation et tendant à conduire à l'ébullition l'eau contenue dans le récupérateur. Le fonctionnement du récupérateur bénéficie donc d'une sécurité totale.

La description qui va suivre, en regard des dessins annexés à titre d'exemples non limitatifs, permettra de bien comprendre comment la présente invention peut être mise en pratique.

La figure 1 représente schématiquement une installation de chauffage central incorporant un récupérateur selon l'invention.

La figure 2, représente, en coupe et à plus grande échelle, un récupérateur selon l'invention comportant une grille tubulaire dont les deux parties ont été supposées rabattues dans une même plan.

La figure 3 représente la section droite, à échelle encore agrandie, d'un tube à ailettes internes d'un récupérateur selon l'invention.

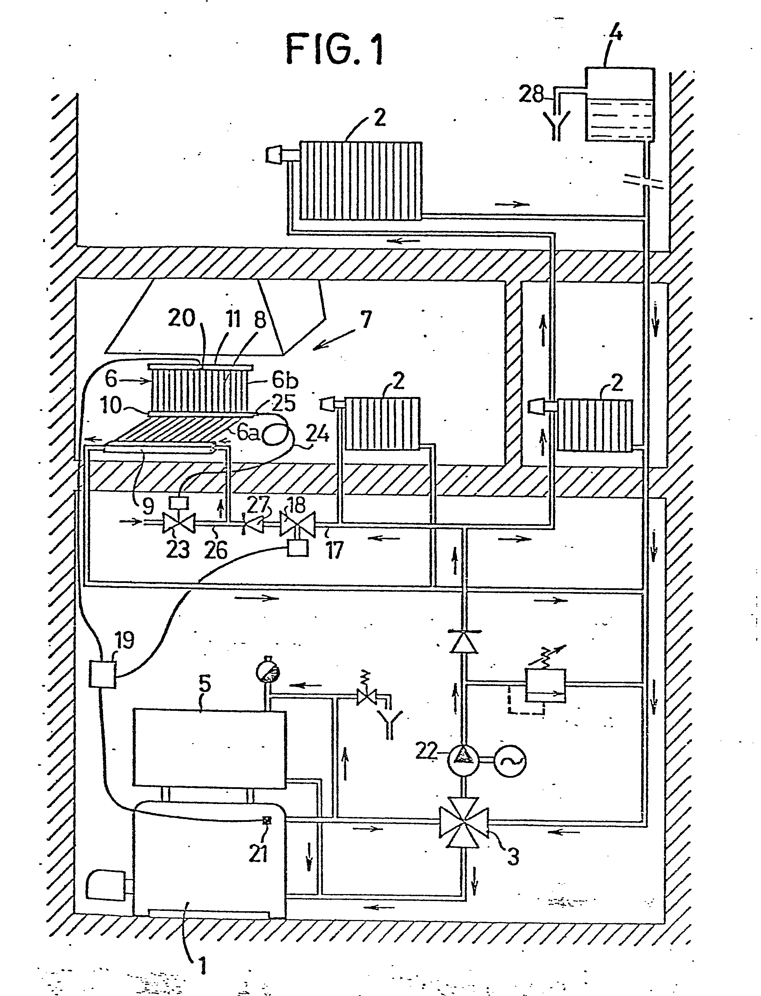

On voit sur la figure 1 que l'installation de chauffage central donnée en exemple comprend essentiellement une chaudière 1, un réseau de radiateurs 2 alimentés par la chaudière 1 à travers une vanne mélangeuse à quatre voies 3 et un accélérateur 22, et un vase d'expansion 4. Un ballon d'eau chaude sanitaire 5 est prévu. Sur le réseau de radiateurs 2 est branché en parallèle un récupérateur 6 placé dans une cheminée à feu ouvert 7. Ce récupérateur comprend une grille composée d'un faisceau tubulaire horizontal 6a, servant de chenets, et d'un faisceau tubulaire vertical 6b surmontant le précédent, ces faisceaux étant formés de tubes 8 parallèles dont les extrémités sont reliées respectivement par des tubes transversaux horizontaux 9 (à l'avant du faisceau inférieur 6a), 10 (réunissant les faisceaux 6a et 6b) et 11 (au sommet du faisceau vertical 6b).

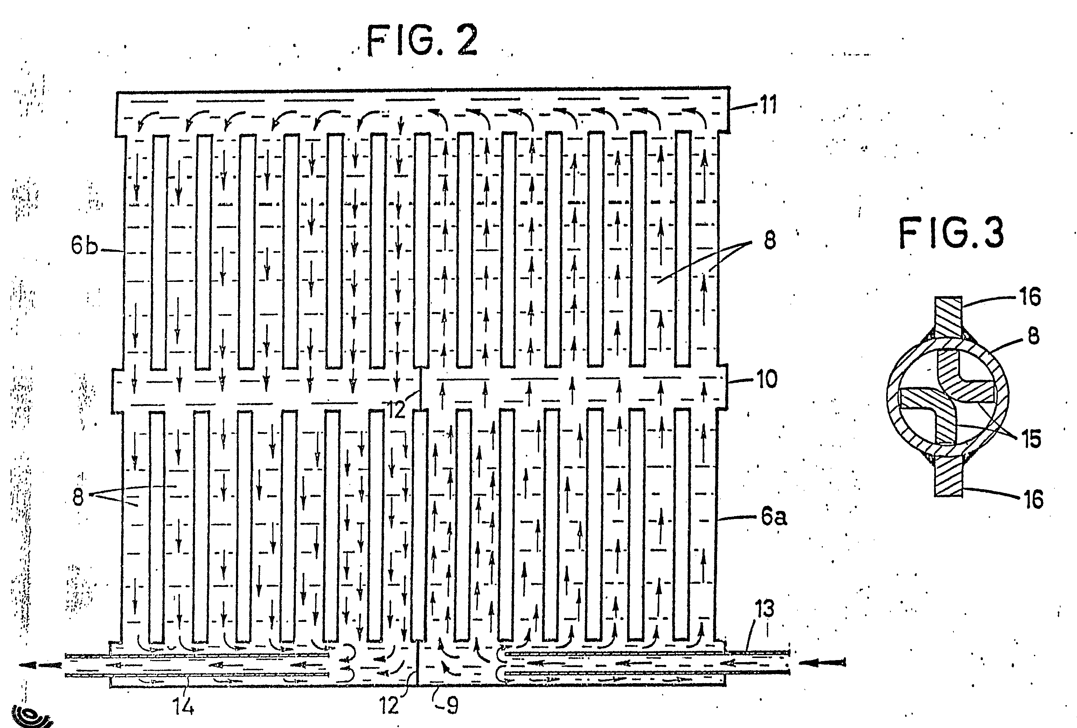

Comme le montre la figure 2, le volume interne de l'ensemble de la grille 6a, 6b est partagé par une cloison 12 /composée/ de deux éléments obturant respectivement les tubes 9 et 10 en leur centre. L'arrivée d'eau dans le récupérateur 6 s'effectue par un tube 13 s'enfonçant coaxialement dans le tube antérieur 9 et débouchant non loin de la cloison 12; de même, la sortie de l'eau échauffée est assurée par un tube 14 pénétrant dans le

tube 9 symétriquement par rapport à la cloison médiane 12. Il en résulte que non seulement l'eau parcourt successivement les deux moitiés du récupérateur 6 définies par la cloison 12, mais encore que son débit est plus important dans les tubes 8 centraux du récupérateur que dans ses tubes 8 latéraux, comme le suggèrent les flèches de la figure 2. La zone de débit fort correspond à la zone centrale du foyer où le brasier du feu de bois se situe généralement, c'est-à-dire à la région où apparaît la plus grande partie des calories à récupérer; par contre, les tubes 8 des bords sont beaucoup moins exposés à la chaleur et leur débit peut être plus faible.

On voit sur la figure 3 la structure d'un tube 8 du récupérateur 6. Ce tube, de section circulaire, est doté d'ailettes internes en croix, lesquelles sont constituées par deux cornières 15 obtenues par pliage à 90° de plats étirés ou laminés en acier doux, préalablement coupés à la longueur des tubes 8. Les deux cornières 15 sont placées dos à dos, comme représenté, à l'aide d'un gabarit de montage, puis enfilées à force dans chaque tube 8 à l'aide d'une presse. Les dimensions des fers plats sont choisies en fonction du diamètre intérieur des tubes 8 afin d'assurer un serrage maximal des cornières dans ceux-ci.

Les tubes 8 du faisceau horizontal 6a de la grille peuvent en outre, comme le montre la figure 3, être pourvus d'ailettes externes 16, fixées par soudage. Ces ailettes augmentent la surface d'échange thermique; de plus, l'ailette supérieure empêche les cendres de s'amasser sur les tubes et de réduire le rendement en raison de leur grand pouvoir isolant.

On peut indiquer à titre d'exemple de réalisation qu'un échangeur de calories comportant 14 tubes 3/4" (21-27) horizontaux (longueur 460 mm) et 14 tubes 3/4" (21-27) verticaux (longueur 600 mm), réunis entre eux par des tubes /transversaux/ de section carrée de 40 x 40 mm, a été construit. Chaque tube de l'échangeur était muni d'ailettes internes comme décrit ci-dessus. L'appareil ainsi conçu a été placé dans une cheminée à feu ouvert où brûlait un feu de bois de moyenne importance, et alimenté en eau, une vanne limitant le débit de sortie de l'appareil. Les chiffres suivant ont été relevés :

Température de l'eau à l'entrée : 8°C;

Température de l'eau à la sortie : 80°C;

Débit : 15 l en 3 mn, soit 300 l/h;

Gain : 72°C.

D'où la puissance de l'appareil :

300 l/h x 72°C = 21 600 Kcal/h, soit environ 25 kW.

Revenant à la figure 1, on voit que le récupérateur 6 reçoit l'eau à réchauffer par un tuyau 17 dans lequel est interposée une électro-vanne 18. Celle-ci est commandée par un thermostat différentiel 19 comportant deux sondes : une sonde 20 plongeant dans le récupérateur 6 et une sonde 21 plongeant dans la chaudière 1. Dès que la température de l'eau contenue dans le récupérateur 6 est supérieure à la température de l'eau contenue dans la chaudière 1, le thermostat 19 commande l'ouverture de l'électro-vanne 18, ainsi que la mise en marche de l'accélérateur 22 si celui-ci se trouvait à l'arrêt. Par contre, lorsque l'eau du récupérateur 6 est moins chaude que celle de la chaudière 1, le thermostat 19 commande la fermeture de l'électro-vanne 18, de sorte que le récupérateur, qui ne saurait alors apporter des calories, est isolé, la circulation d'eau à travers lui étant arrêtée.

Un dispositif de sécurité est prévu, qui entre en action en cas d'élévation anormale de la température de l'eau contenue dans le récupérateur 6 par suite d'une /ou d'une insuffisance/ absence/de circulation due par exemple à une panne de secteur électrique, à un arrêt intempestif du circulateur 22 ou à une défaillance de l'électro-vanne 18. Ce dispositif comprend une vanne 23 reliée par un tube capillaire 24 à une sonde de commande 25 plongeant dans un doigt de gant prévu à cet effet dans le récupérateur. La vanne 23, dont le fonctionnement ne fait appel à aucune alimentation en énergie électrique, est interposée dans /d'eau/ un tuyau 26 reliant une source/froide constamment sous

pression au tuyau 17 d'entrée du récupérateur 6, en aval de l'électro-vanne 18 et d'un clapet anti-retour 27 empêchant l'eau froide d'aller vers les radiateurs 2. Lorsque la sonde 25 détecte une température égale ou supérieure à 95°C, elle commande l'ouverture de la vanne 23, qui envoie alors de l'eau froide dans le récupérateur 6 que celle-ci refroidit; lorsque le refroidissement est suffisant, la vanne de sécurité 23 se referme. L'eau en excédent s'évacue par le trop-plein 28 du vase d'expansion 4, celui-ci étant du type dit "à l'air libre".

## REVENDICATIONS

1.- Récupérateur de chaleur à circulation d'eau, placé dans une cheminée à feu ouvert et associé à une installation de chauffage central (existante ou à construire) comportant une chaudière et des radiateurs à eau, ce récupérateur, constitué par une grille tubulaire qui peut comprendre un faisceau inférieur de tubes horizontaux et un faisceau postérieur de tubes verticaux, étant caractérisé par le fait que les tubes de ladite grille comportent des ailettes internes sensiblement radiales, constituées par des cornières juxtaposées dos à dos le long de leurs arêtes et introduites par enfoncement.

2.- Récupérateur selon la revendication 1, caractérisé par le fait que les cornières sont des bandes de tôle pliées à 90° et introduites au nombre de deux dans lesdits tubes où elles forment des ailettes disposées en croix.

3.- Récupérateur selon la revendication 1 ou 2, caractérisé par le fait qu'il comprend un faisceau inférieur de tubes horizontaux et que ceux-ci comportent en outre au moins une ailette externe radiale, dirigée vers le haut.

4.- Récupérateur selon l'une quelconque des revendications 1 à 3, caractérisé par le fait que l'ensemble de ses tubes et des ailettes que ceux-ci comportent est réalisé en acier.

5.- Récupérateur selon l'une quelconque des revendications 1 à 4, caractérisé par le fait que son volume interne est partagé en deux moitiés par une cloison séparatrice située dans son plan médian de symétrie vertical et que l'eau, qui est amenée à passer par l'une puis par l'autre moitié, est introduite et évacuée en des endroits voisins dudit plan médian.

6.- Récupérateur selon la revendication 5, caractérisé par le fait que l'eau y pénètre et en sort par l'avant de sa partie inférieure.

7.- Récupérateur selon la revendication 6, caractérisé par le fait qu'il comprend un faisceau inférieur de tubes horizontaux, reliés antérieurement par un tube transversal horizontal partagé en son milieu par ladite cloison séparatrice, et que l'arrivée et la sortie de l'eau s'effectuent par des tuyaux pénétrant coaxialement à l'intérieur dudit tube transversal, symétriquement en direction de ladite cloison, et débouchant à proximité de cette dernière.

8.- Récupérateur selon l'une quelconque des revendications 1 à 7, caractérisé par le fait qu'il est branché en parallèle sur les radiateurs de l'installation et que son entrée est reliée à la tuyauterie alimentant ceux-ci via une électro-vanne commandée à l'ouverture ou à la fermeture suivant que l'eau contenue dans le récupérateur est plus chaude ou moins chaude que l'eau contenue dans la chaudière.

9.- Récupérateur selon la revendication 8, caractérisé par le fait que l'électro-vanne est commandée par un thermostat différentiel dont les deux sondes sont placées respectivement dans le récupérateur et dans la chaudière.

10.- Récupérateur selon la revendication 8 ou 9, caractérisé par le fait que son entrée est reliée à la tuyauterie alimentant les radiateurs via un clapet anti-retour placé en série avec ladite électro-vanne, ainsi qu'à une source d'eau froide via une vanne de sécurité normalement fermée et commandée mécaniquement à l'ouverture par une sonde thermométrique à fonctionnement autonome mesurant la température de l'eau dans le récupérateur.

FIG.1

FIG.3

FIG.2

16
8
15
16

11
8
10
6a
13
9
12
12
6b
8
14

**Office européen
des brevets**

**RAPPORT DE RECHERCHE EUROPEENNE** EP 81 20 0399

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| | FR - A - 2 394 019 (BAUMIER)<br>* Page 4, lignes 1-34; figures 1-5 *<br><br>-- | 1,3 | F 24 B  9/04 |
| | FR - A - 2 394 020 (GRAVIER)<br>* Page 5, lignes 1-25; figures 1-4 *<br><br>-- | 1,3 | |
| | US - A - 2 335 687 (MODINE)<br>* Page 2, colonne à droite, lignes 10-23; figure 6 *<br><br>-- | 1,2 | DOMAINES TECHNIQUES RECHERCHES (Int. Cl.³) |
| | FR - A - 2 046 847 (ROSSI)<br>* Page 5, revendication 1; figure 3b *<br><br>-- | 1,2 | F 24 B<br>F 28 F |
| | FR - A - 2 315 064 (PERIE)<br>* Page 6, lignes 35-40; page 7, lignes 1-4; figure 5 *<br><br>-- | 5 | |
| | DE - A - 2 713 492 (HARLANDER)<br>* Page 7, paragraphe 3; figure 1 *<br><br>---- | 8 | CATEGORIE DES DOCUMENTS CITES<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |

| | | | |
|---|---|---|---|
| ✓ | Le présent rapport de recherche a été établi pour toutes les revendications | | |
| Lieu de la recherche<br>La Haye | Date d'achèvement de la recherche<br>09-10-1981 | Examinateur<br>VANHEUSDEN | |

OEB Form 1503.1   06.78